# EUROPÄISCHE PATENTANMELDUNG

(11) **EP 0 764 806 A1**
(43) Veröffentlichungstag der Anmeldung: **26.03.1997**
(21) Anmeldenummer: 96100602.0
(22) Anmeldetag: 17.01.1996
(51) Int. Cl.: F16L 5/06, F16B 23/00

(54) **Vorrichtung zur Durchführung von Leitungen durch eine Öffnung in einer Wand**

(30) Priorität: 16.09.1995 DE 19534484
(71) Anmelder: Hauff, Werner, D-89561 Ballmertshofen (DE)
(72) Erfinder: Hauff, Werner, D-89561 Ballmertshofen (DE)
(74) Vertreter: Fay, Hermann, Dipl.-Phys. Dr.

(57) **Zusammenfassung**

Die Vorrichtung zur Durchführung von Leitungen (21) durch eine Öffnung in einer Wand umfaßt ein Futterrohr (2), mindestens einen relativ zum Futterrohr um die Rohrachse (3) verdrehbaren Spannring (4) und einen Dichtring (5), der zwischen zwei sich am Futterrohr (2) und am Spannring (4) axial gegenüberstehenden Dichtflächen (6, 7) angeordnet ist, deren Abstand voneinander durch Verdrehen des Spannrings (4) veränderlich ist. Der Spannring (4) ist zu seiner Verdrehung mit einer Querverzahnung (9) zum Ansetzen eines Drehwerkzeugs (10) versehen. Radial neben dem Spannring (4) befindet sich mindestens eine relativ zum Futterrohr (2) festliegende Führungsaufnahme (11). Das Drehwerkzeug (10) besitzt ein Zahnrad (12) zum formschlüssigen Eingriff in die Querverzahnung (9) und einen Führungszapfen (13) zum drehbaren Eingriff in die Führungsaufnahme (11). Verdrehen des Zahnrades (12) über die Welle (14) ergibt eine entsprechende Verdrehung des Spannrings (4). Die Welle (14) kann axial verlängerbar und/oder biegbar sein und dadurch in einen Bereich abseits der Vorrichtung führen, in dem genügend Platz besteht, um mittels eines SchraubendreheRs die Welle (14) und damit das Zahnrad (12) zu betätigen.

## Beschreibung

Die Erfindung betrifft eine Vorrichtung zur Durchführung von Leitungen, wie Rohre, Kabel oder dergl., durch eine Öffnung in einer Wand, wie Mauer- oder Betonwand, mit einem die Leitungen umgebenden, in die Wandöffnung einsetzbaren Futterrohr, ferner mit einem relativ zum Futterrohr um die Rohrachse verdrehbaren Spannring und mit einem Dichtring, der zwischen zwei sich am Futterrohr und am Spannring axial gegenüberstehenden ringförmigen Dichtflächen angeordnet ist, deren Abstand voneinander durch Verdrehen des Spannrings veränderlich ist, wobei der Spannring zu seiner Verdrehung mit einer Einrichtung zum Ansetzen eines Drehwerkzeugs versehen ist.

Vorrichtungen dieser Art sind in verschiedenen Ausführungsformen etwa aus DE 27 17 951 A1 oder aus der zum nicht vorveröffentlichten Stand der Technik gehörenden deutschen Patentanmeldung P 195 05 575.6 bekannt. Allen ist gemeinsam, daß durch Verdrehen des Spannrings der Dichtring geklemmt und dadurch die Dichtung geschlossen oder der Dichtring entspannt und dadurch die Dichtung geöffnet wird, wobei der Dichtring je nach Bauart der Vorrichtung die Dichtung zwischen dem Futterrohr und der Laibungsfläche der Wandöffnung oder zwischen dem Futterrohr und den Leitungen bewirkt. Die am Spannring zu seiner Verdrehung vorgesehene Einrichtung zum Ansetzen eines Drehwerkzeugs ist bei diesen Vorrichtungen durch über den Ringumfang verteilte axiale Ausnehmungen gebildet, die zur drehschlüssigen Aufnahme eines am Spannring anzusetzenden Gabelschlüssels mit in die Ausnehmungen passenden Schlüsselzapfen dienen. Schwierigkeiten können dabei im Zusammenhang mit der Handhabung eines solchen Schlüssels entstehen; um nämlich den Spannring zu verdrehen, muß der Schlüssel mit seinem Schlüsselarm um die Ringachse geschwenkt werden, wozu häufig nur ungenügender Platz zur Verfügung steht, sei es bedingt durch die Lage der Durchführung in Mauerecken oder Boden- bzw. Deckennähe oder durch die oft anzutreffende paketweise Anordnung mehrerer Durchführungen dicht nebeneinander, in welchem letzteren Fall die Handhabung des Schlüssels an den im Innern der Paketanordnung liegenden Durchführungen durch die in den jeweils benachbarten Durchführungen verlaufenden Leitungen behindert oder sogar unmöglich gemacht wird.

Der Erfindung liegt die Aufgabe zugrunde, eine Vorrichtung der eingangs genannten Art mit dem dazugehörenden Drehwerkzeug so auszubilden, daß die Handhabung des Drehwerkzeugs beim Verdrehen des Spannrings durch die Einbauverhältnisse der Vorrichtung, insbesondere durch Leitungen dicht benachbarter Durchführungen, nicht behindert werden kann.

Diese Aufgabe wird nach der Erfindung bei einer Vorrichtung mit den eingangs genannten Merkmalen dadurch gelöst, daß der Spannring als Einrichtung zum Ansetzen des Drehwerkzeugs mit einer sich über den Ringumfang erstreckenden Querverzahnung versehen ist, daß radial neben dem Spannring am Futterrohr eine Führungsaufnahme vorgesehen ist und daß das Drehwerkzeug ein Zahnrad zum in Umfangsrichtung formschlüssigen Eingriff in die Querverzahnung des Spannrings und einen mit dem Zahnrad koaxialen Führungszapfen zum drehbaren Eingriff in die Führungsaufnahme am Futterrohr sowie eine mit dem Führungszapfen koaxiale Welle für den Drehantrieb des Zahnrads besitzt.

Zum Drehen des Spannrings mit Hilfe des Drehwerkzeugs wird letzteres mit dem Führungszapfen seines Zahnrades in die Führungsaufnahme am Futterrohr eingesetzt und dabei das Zahnrad mit der Verzahnung des Spannrings zum Eingriff gebracht. Dann bedarf es nur noch der Drehung des Zahnrades, was über die Welle unschwer erfolgen kann. Das Zahnrad besitzt dabei einen im Verhältnis zum Durchmesser des Futterrohrs kleinen Querschnitt, so daß auch unter beengten Einbauverhältnissen immer ausreichend freier Platz zum Ansetzen des Zahnrads zur Verfügung steht. Die Welle führt aus der unmittelbaren Nähe der Vorrichtung und ihrer Leitungen hinaus in einen Bereich größeren Abstands von der Vorrichtung und ihren Leitungen, in dem entsprechend ausreichender Freiraum zur drehenden Betätigung der Welle und zum Anschluß eines geeigneten Drehantriebs an die Welle besteht.

Bevorzugte Ausführungsformen sind dadurch gekennzeichnet, daß das Futterrohr einen am Rohr drehfesten Außenflansch aufweist, und daß in dem Außenflansch die Führungsaufnahme als ein mit seiner Achse zur Rohrachse paralleles Sackloch ausgebildet ist. Dieser Außenflansch kann mit dem Futterrohr einstückig ausgebildet sein, aber auch ein selbstständiges Bauteil darstellen, das axial verschiebbar auf dem Futterrohr angeordnet ist, damit etwa der Außenflansch axialen Verstellungen des Spannrings bei dessen Verdrehen folgen kann. Die Ausbildung der Führungsaufnahme als Sackloch empfiehlt sich, um bei bündiger Anordnung des Außenflansches in beispielsweise einer Betonwand das Eindringen von Zementbrühe oder -schlamm von der Wandseite her in die Führungsaufnahme zu verhindern. Das Sackloch kann vollständig im Außenflansch ausgebildet sein. Es besteht aber auch die unter Umständen zweckmäßige Möglichkeit, daß das Sackloch durch den Außenrand des Außenflansches zur Hälfte seines Querschnitts angeschnitten ist. Werden dann in der Wand zwei Vorrichtungen mit dem Rand ihrer Außenflansche unmittelbar aneinanderschließend angeordnet, können sich die zwei jeweils halben Sacklöcher beider Außenflansche gegenseitig zu einer vollständigen Führungsaufnahme ergänzen, die dann zum Ansetzen des Drehwerkzeugs für beide Vorrichtungen genutzt werden kann.

Am Außenflansch kann in einer vorteilhaften Ausführungsform auch die dem Dichtring zugeordnete Dichtfläche des Futterrohres oder des Spannrings ausgebildet sein, was sich dann besonders anbietet, wenn der Außenflansch, wie schon erwähnt, ein selbständiges, auf dem Futterrohr axial verschiebbar angeordnetes Bauteil darstellt.

Im übrigen empfiehlt es sich, daß die Führungsaufnahme zu mehreren am Futterrohr in einer über den Rohrumfang verteilten Anordnung vorgesehen ist, so daß je Vorrichtung mehrere Ansetzmöglichkeiten für das Zahnrad bestehen und die jeweils geeigneteste Möglichkeit gewählt werden kann.

Eine weitere sehr vorteilhafte Ausführungsform der Erfindung ist dadurch gekennzeichnet, daß zwischen dem Dichtring und einer der ihm zugeordneten Dichtflächen des Futterrohres bzw. Spannrings ein Dichtflansch eingefügt ist, der an einem Einsatzteil ausgebildet ist, das sich im Inneren des Futterrohres befindet. Dieses Einsatzteil kann beispielsweise ein das Futterrohr überhaupt völlig verschließender Deckel sein, wenn etwa die Vorrichtung noch nicht mit Leitungen belegt ist; das Einsatzteil kann aber auch eine oder mehrere Stutzen für je eine der aufzunehmenden Leitungen aufweisen und an den Stutzen mit Einrichtungen zum dichtenden Abschluß gegen die jeweilige Leitung versehen sein, wobei diese Einrichtungen im einfachsten Fall aus einem Schrumpfschlauch bestehen können.

Im übrigen wird man die Anordnung vorzugsweise so treffen, daß der Spannring in einem Gewinde am Futterrohr geführt und verdrehbar ist, so daß sich der Spannring bei seiner Drehung axial entsprechend der Gewindesteigung verstellt und dabei seinen Abstand gegenüber der dem Futterrohr zugeordneten Dichtfläche verändert.

Damit beim Einmauern oder Einbetonieren des Futterrohres in die Wand das Gewinde am Futterrohr nicht durch Mörtel oder Beton verschmutzt werden kann, empfiehlt es sich, ein Schutzteil vorzusehen, das mit einem Außengewinde koaxial in das am Futterrohr an sich zur Aufnahme des Spannrings vorhandene Innengewinde einschraubbar ist und im eingeschraubten Zustand dieses Innengewinde völlig abdeckt und vor Verschmutzungen schützt. Das Schutzteil ist vorzugsweise als Deckel ausgebildet der im in das Futterrohr eingeschraubten Zustand das Innere des Futterrohrs verschließt und daher auch das Rohrinnere vor eindringendem Schmutz schützt. Ein solches Schutzteil empfiehlt sich besonders dann, wenn der fest, das heißt unverstellbar auf dem Futterrohr sitzende, insbesondere mit dem Futterrohr einstückig ausgebildete Außenflansch bündig mit dem Ende des Futterrohrs abschließt und daher das Futterrohr mit dem Außenflansch zum Betonieren der Wand innerhalb der Wandschalung angeordnet werden kann. Für diesen Fall ist zweckmäßigerweise das Schutzteil so ausgebildet, daß es im in das Futterrohr eingeschraubten Zustand ebenfalls mit dem Außenflansch und dem Futterrohrende bündig abschließt.

Für eine einfache Montage und Demontage des Schutzteils ist es bevorzugt, wenn das Schutzteil mit einem Hilfsring drehschlüssig koppelbar ist und wenn der Hilfsring am Ringumfang die Querverzahnung aufweist. Dann kann der Hilfsring ebenso wie der Spannring in dem Gewinde am Futterrohr verdreht werden, indem das Zahnrad des Drehwerkzeugs mit der Querverzahnung in Eingriff gebracht wird.

Besonders vorteilhaft dabei ist, wenn der Durchmesser des Hilfsrings dem Durchmesser des Spannrings entspricht, da gleichfalls die im Futterrohr angeordneten Führungsaufnahmen zur Aufnahme des Führungszapfens mit dem selben Zahnrad genutzt werden können.

Zur Herstellung der drehschlüssigen Verbindung ist zweckmäßigerweise vorgesehen, daß im Schutzteil Zapfenlöcher angeordnet sind, in die an den Hilfsring ausgebildete Zapfen einsteckbar sind.

Zweckmäßigerweise besitzt die mit dem Zahnrad drehfest verbundene Welle an ihrem vom Zahnrad abgewandten Ende einen Mehrkant zum Anschluß eines auf beide Drehrichtungen umschaltbaren Ratschen- oder Knarrendrehers. Die Welle kann axial verlängerbar und/oder biegbar ausgebildet sein, um den jeweiligen Einbauverhältnissen auf einfache Weise Rechnung tragen zu können. Die axiale Verlängerbarkeit kann mit Hilfe in die Welle einfügbarer Verlängerungsstücke oder zueinander teleskopisch verstellbarer Wellenabschnitte verwirklicht werden; die Biegbarkeit kann durch Verwendung einer biegsamen Welle oder durch in die Welle eingesetzte Wellengelenke erreicht werden.

Im folgenden wird die Erfindung an in der Zeichnung dargestellten Ausführungsbeispielen näher erläutert; es zeigen:
- Fig. 1: einen Axialschnitt durch eine erste Ausführungsform der Erfindung,
- Fig. 2: die Stirnansicht des Gegenstandes der Fig. 1, gesehen von der in Fig. 1 rechten Seite her,
- Fig. 3: ein Drehwerkzeug zur Betätigung des Spannrings der Vorrichtung nach den Fig. 1 und 2 in einer Seitenansicht,
- Fig. 4: eine andere Ausführungsform der erfindungsgemäßen Vorrichtung in einer der Fig. 1 entsprechenden Darstellung,
- Fig. 5: einen Axialschnitt durch eine nochmals andere Ausführungsform der erfindungsgemäßen Vorrichtung, bei teilweiser Darstellung der Wand mit ihrer die Vorrichtung aufnehmenden Wandöffnung und ohne Darstellung der Leitungen,
- Fig. 6: den Schnitt VI-VI in Fig. 5, und
- Fig. 7: das Futterrohr gemäß Fig. 1 oder Fig. 4 in einem zum Einbetonieren in die Wand vorbereiteten Zustand.

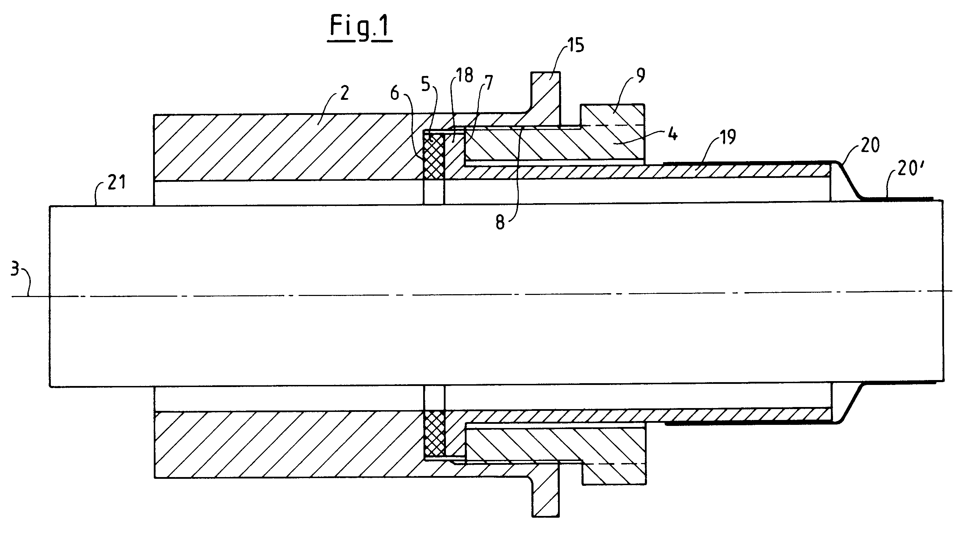

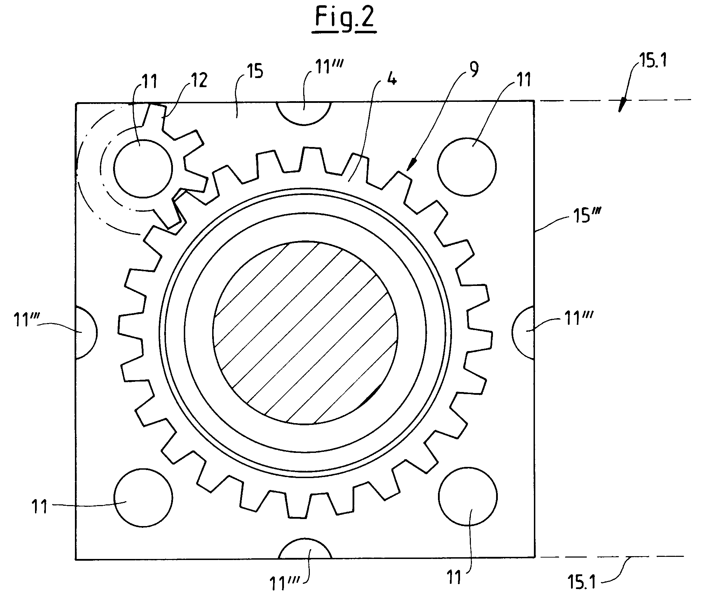

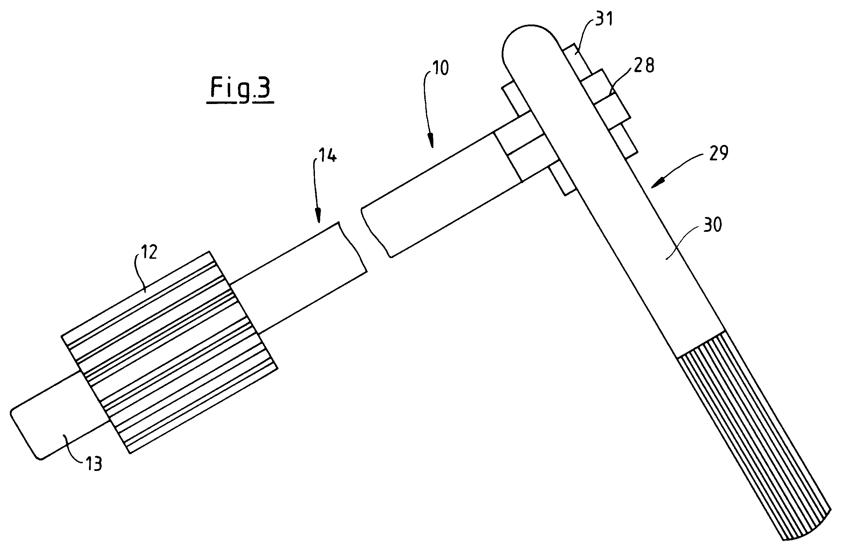

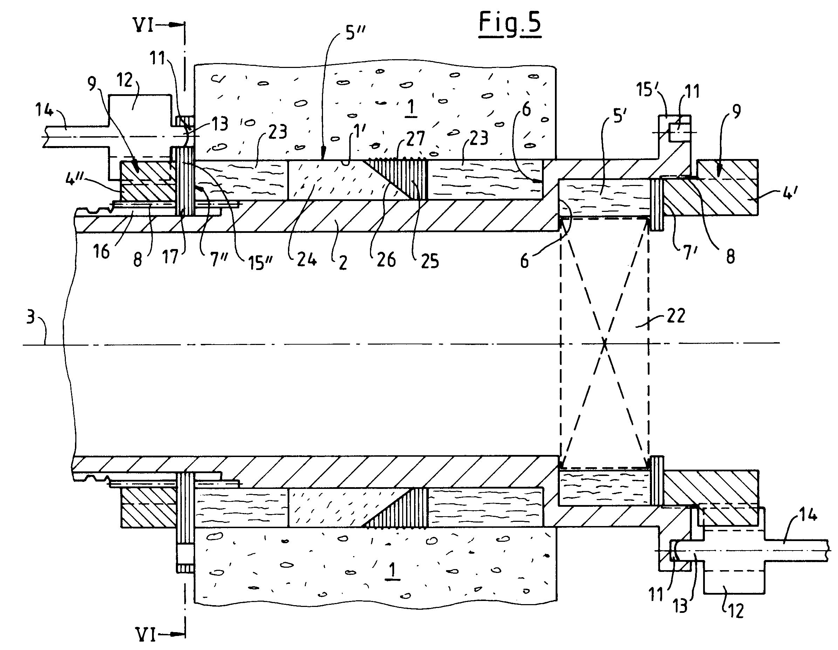

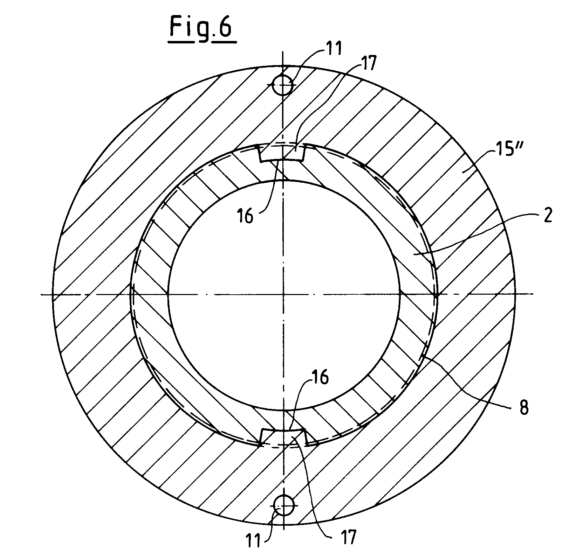

Die in der Zeichnung dargestellten Vorrichtungen dienen zur Durchführung von Leitungen, wie Rohren, Kabeln oder dergl., durch eine Öffnung in einer lediglich in Fig. 5 dargestellten Wand 1, wie einer Mauer- oder Betonwand. Die Vorrichtung besitzt ein die Leitungen umgebendes, in die Wandöffnung einsetzbares Futterrohr 2, ferner einen relativ zum Futterrohr um die Rohrachse 3 verdrehbaren Spannring 4, 4', 4'', sowie einen Dichtring 5, 5' ,5'', der zwischen zwei sich am Futterrohr 2 und am Spannring 4, 4', 4'' axial gegenüberstehenden ringförmigen Dichtflächen 6, 7, 7', 7'' angeordnet ist, deren Abstand voneinander durch Verdrehen des Spannrings veränderlich ist, was in den Ausführungsbeispielen auf einfache Weise dadurch erreicht wird, daß der Spannring 4, 4', 4'' in einem Gewinde 8 am Futterrohr 2 geführt und darin verdrehbar ist. Die Fig. 1 bis 4 zeigen Vorrichtungen mit jeweils nur einem solchen Spannring 4 und Dichtring 5, die Fig. 5 eine Vorrichtung mit zwei Spannringen 4', 4'' und Dichtringen 5', 5''. In jedem Fall aber sind die Spannringe mit einer sich über den Ringumfang erstreckenden Querverzahnung 9 versehen, die als Einrichtung zum Ansetzen des Drehwerkzeugs 10 dient. Radial neben dem Spannring4, 4', 4'' befindet sich am Futterrohr 2 mindestens eine Führungsaufnahme 11. Das 10 Drehwerkzeug, das als Ganzes inbesondere aus Fig. 3 ersichtlich ist, verfügt über ein Zahnrad 12 zum in Umfangsrichtung formschlüssigen Eingriff in die Querverzahnung 9 des Spannrings 4, 4', 4'' und über einen mit dem Zahnrad 12 koaxialen Führungszapfen 13 zum drehbaren Eingriff in die Führungsaufnahme 11 am Futterrohr 2. Ferner sitzt das Zahnrad 12 an einer mit dem Führungszapfen 13 koaxialen Welle 14 über die der Drehantrieb des Zahnrads 12 erfolgt. Wird das Drehwerkzeug 10 mit dem Führungszapfen 13 in die Führungsaufnahme 11 eingesetzt, kommt das Zahnrad 12 mit der Querverzahnung 9 des Spannrings 4, 4', 4'' zum Eingriff. Durch die Drehung des Zahnrads 12 wird entsprechend der Spannring verdreht. Am Futterrohr 2 sind mehrere Führungsaufnahmen 11 in über den Rohrumfang verteilter Anordnung vorhanden, von welchen die unter den jeweiligen Gegebenheiten günstigste zum Ansetzen des Drehwerkzeugs 10 gewählt werden kann. Das Futterrohr 2 trägt einen am Rohr drehfesten Außenflansch 15, 15', 15'', in dem die Führungsaufnahmen 11 als mit ihrer Achse zur Rohrachse 3 paralleles Sackloch ausgebildet sind. Das Sackloch kann sich dabei vollständig im Außenflansch 15, 15', 15'' befinden; es besteht aber auch die jeweils bei 11''' in Fig. 2 dargestellte Möglichkeit, daß das Sackloch durch den Außenrand 15''' des Außenflansches 15, 15', 15'' zur Hälfte seines Querschnitts angeschnitten ist, so daß ein vollständiges Sackloch erst dann entsteht, wenn unmittelbar neben der Vorrichtung eine weitere Vorrichtung so in der Wand angeordnet wird, daß sich die Ränder 15''' der Außenflansche 15, 15', 15'' beider Vorrichtungen unmittelbar berühren, wie es in Fig. 2 bei 15.1 gestrichelt angedeutet ist. In diesem Fall ergänzen sich die beiden halben Sacklöcher beider Außenflansche 15, 15.1 gegenseitig zu einem vollständigen Sackloch, das dann zum Ansetzen des Drehwerkzeuges 10 für wahlweise die eine odere andere der beiden Vorrichtungen genutzt werden kann. Am Außenflansch 15'' kann auch die dem Dichtring 5'' zugeordnete Dichtfläche 7'' des Spannrings 4'' ausgebildet sein, wie dies in Fig. 5 am Beispiel des in der Figur linken Außenflansches 15'' dargestellt ist. Dieser Flansch 15'' ist im übrigen auf dem Futterrohr 2 zwar drehfest, jedoch axial verschiebbar geführt, wozu das Futterrohr 2 außenseitig mit zwei axial verlaufenden Nuten 16 versehen ist, in die der Außenflansch 15'' mit radial einwärts gerichteten Nocken 17 eingreift, wie dies insbesondere aus Fig. 6 ersichtlich ist. In allen anderen Fällen ist der Außenflansch 15, 15' einstückig mit dem Futterrohr 2 ausgebildet.

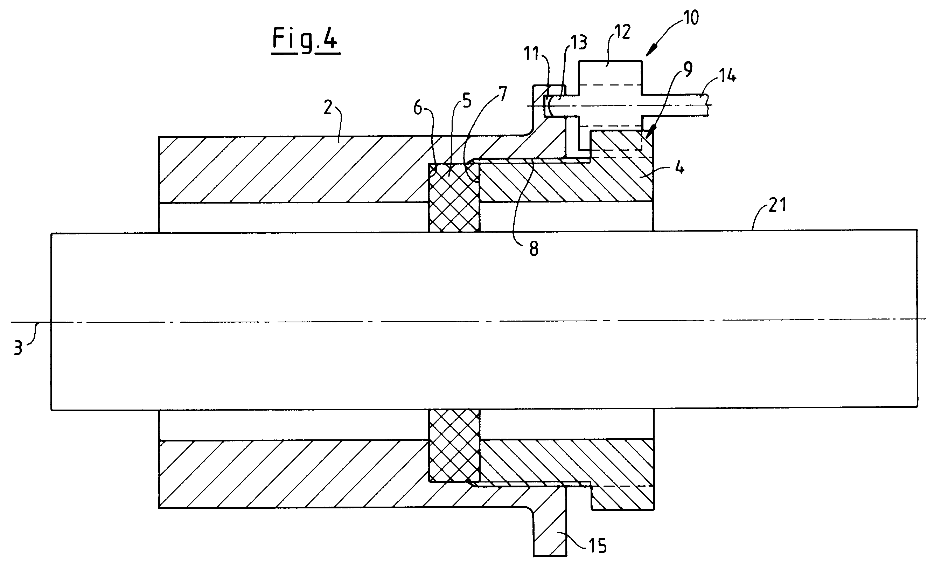

In Fig. 1 ist zwischen dem Dichtring 5 und der ihm zugeordneten Dichtfläche 6 des Futterrohrs 2 ein Dichtflansch 18 eingefügt, der an einem Einsatzteil 19 ausgebildet ist, das sich im Innern des Futterohres 2 befindet. Dieses Einsatzteil 19 ist ein Rohrstutzen, der auf seinem aus dem Spannring 4 vorstehenden Teil einen Schrumpfschlauch 20 trägt, der zur Abdichtung der durch das Futterrohr 2 und den Rohrstutzen hindurchlaufenden Leitung 21 mit in seinem über den Rohrstutzen überstehenden Teil 20' auf die Leitung 21 aufgeschrumpft ist. Im Ausführungsbeispiel nach Fig. 4 ist der Dichtring 5 von einem elastischen, aber im wesentlichen inkompressiblen Dichtkörper aus beispielsweise Gummi gebildet, der sich unter dem von den Dichtflächen 6, 7 axial auf ihn ausgeübten Druck verformt und dadurch sich dichtend radial gegen die Leitung 21 anlegt. In gleicher Weise wirkt im Ausführungsbeispiel nach Fig. 5 der Dichtring 5' auf der in der Figur rechten Vorrichtungsseite bei seiner Verspannung durch den Spannring 4' radial nach innen gegen ein ebenfalls elastisches und inkompressibles Einsatzteil 22, das seinerseits unter dem vom Dichtring 5' ausgeübten Druck gegen die das Einsatzteil 22 durchsetzenden, nicht dargestellten Leitungen abdichtet. Derartige Dichtungsanordnungen sind in der schon eingangs genannten Patentanmeldung P 195 05 575.6 beschrieben, so daß sie hier keiner weiteren Erörterung bedürfen. Der in Fig. 5 auf der linken Seite der Vorrichtung befindliche Spannring 4'' dient dagegen zur Kompression eines zwischen dem Futterrohr 2 und der Laibungsfläche 1' der Wandöffnung befindlichen Dichtring 5'', wobei zwischen dem Dichtring 5'' und dem Spannring 4'' der auf dem Futterrohr 2 axial verschiebliche Außenflansch 15'' eingeschaltet ist. Im einzelnen besteht dieser Dichtring 5'' aus zwei axial hintereinander angeordneten Dichtringteilen 23, zwischen denen ein axial unverformbarer Distanzring 24 angeordnet ist. Die Länge des Distanzrings 24 in axialer Rohrrichtung ist so gewählt, daß die beiden Dichtringteile 23 den Ringraum zwischen der äußeren Umfangsfläche des Futterrohrs 2 und der Laibungsöffnung 1' der Wandöffnung jeweils an seinen beiden Enden abdichten. Der Distanzring 24 ist mit einem Klemmteil 25 kombiniert, das an einer Gleitfläche 26 verstellbar geführt ist, die zur Rohrlängsrichtung so geneigt ist, daß das Klemmteil 25 unter der Wirkung des auf die Dichtringteile 23 ausgeübten axialen Pressdrucks auf der Gleitfläche 26 auswärts gegen die Laibungsfläche 1' der Wandöffnung verstellt und gegen die Laibungsfläche 1' angepresst wird. Im einfachsten Fall ist das Klemmteil 25 von einem umfangsmäßig geteilten, axial neben dem Distanzring 24 liegenden Klemmring und die Gleitfläche 26 von zwei einander zugeordneten Kegelflächen am Distanzring 24 und am Klemmring gebildet. Unter dem axialen Pressdruck wird der Klemmring 25 auf der Gleitfläche 26 gegen den Distanzring 24 verschoben und dadurch radial aufgespreizt. Der Klemmring 25 ist mit gegen die Laibungsfläche 1' gerichteten scharfkantigen oder spitzen Vorsprüngen 27 versehen, die beim Anpressen des Klemmrings 25 gegen die Laibungsfläche 1' in letztere eindringen und zu einem Formschluß führen können, der eine Sicherung des Futterrohrs 2 gegen axiales Verschieben in der Wandöffnung ergibt.

In den Fig. 1, 2 und 4 bis 6 ist das Drehwerkzeug 10 jeweils nur mit seinem Führungszapfen 13, Zahnrad 12 und einem kurzen Teil der Welle 14 dargestellt. Die vollständige Ausbildung des Drehwerkzeugs 10 ist aus Fig. 3 ersichtlich. Die mit dem Zahnrad 15 drehfest und koaxial verbundene Welle 14 ist an ihrem vom Zahnrad 12 abgewandten Ende mit einem Mehrkant 28 zum Aufstecken eines üblichen, auf beide Drehrichtungen umstellbaren Ratschen- oder Knarrendrehers 29 ausgebildet, der einen Handgriff 30 und zur Aufnahme des Mehrkants 28 eine Schlüsselnuß 31 besitzt. Die Welle 14 ist in Fig. 3 unterbrochen dargestellt, um dadurch anzudeuten, daß sie axial verlängerbar und/oder biegbar ausgebildet sein kann, so daß die Welle 14 die Möglichkeit bietet, bei an der Vorrichtung angesetztem Zahnrad 12 den Ratschen- oder Knarrendreher 29 in einen Bereich abseits der Vorrichtung und Leitungen zu verlegen, der genügend Platz zur Handhabung des Handgriffs 30, also zu seinem Verschwenken um die Wellenachse bietet.

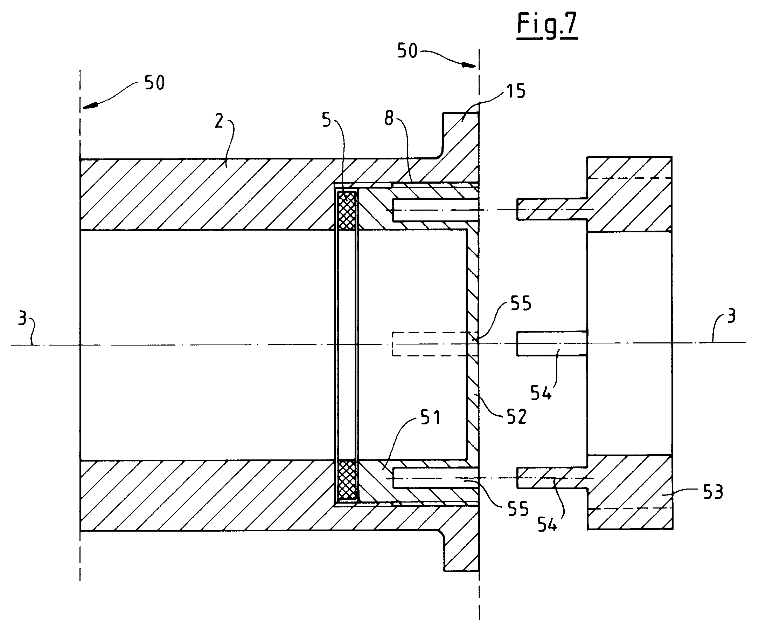

In Fig. 7 ist das Futterrohr 2 mit seinem Außenflansch 15, der mit dem Ende des Futterrohrs 2 bündig abschließt und einstückig mit dem Futterrohr 2 ausgebildet ist, in einem zum Einbetonieren in die Wand vorbereiteten Zustand dargestellt, wobei zum besseren Verständnis die beiden Schalungsebenen der Wand gestrichelt bei 50 angedeutet sind. In das Gewinde 8 des Futterrohrs 2 ist anstelle des Spannrings 4 ein Schutzteil 51 mit einem Außengewinde eingeschraubt, so daß auch das Schutzteil 51 bündig mit dem Ende des Futterrohres 2 und dem Außenflansch 15 abschließt und im übrigen innen im Futterrohr 2 am Dichtring 5 anliegt. Das Schutzteil 51 ist mit einer Scheibe 52 als Deckel ausgebildet. Im Ergebnis bewahrt das Schutzteil 51 während der Betonarbeiten sowohl das Gewinde 8, wie auch den Dichtring 5 und das Innere des Futterrohres 2 vor eindringendem Zementschmutz. Ist die Wand errichtet und die Schalung abgenommen, wird das Schutzteil 51 aus dem Futterrohr 2 herausgeschraubt und durch den Spannring 4 ersetzt. Zum Herausschrauben des Schutzteils 51 kann der in Fig. 7 im rechten Figurenteil dargestellte Hilfsring 53 dienen, der dazu mit Zapfen 54 axial in am Schutzteil 51 vorgesehene Zapfenlöcher 55 eingesteckt wird. Damit der Hilfsring 53 in gleicher Weise wie der Spannring 4 durch das Drehwerkzeug 10 betätigt werden kann, kann auch der Hilfsring 53, wie schon der Spannring 4, mit einer Querverzahnung 9 am Ringumfang ausgestattet sein und den gleichen Durchmesser wie der Spannring aufweisen.

## Patentansprüche

1. Vorrichtung zur Durchführung von Leitungen, wie Rohre, Kabel oder dergl., durch eine Öffnung in einer Wand, wie Mauer- oder Betonwand, mit einem die Leitungen umgebenden, in die Wandöffnung einsetzbaren Futterrohr (2), ferner mit einem relativ zum Futterrohr um die Rohrachse (3) verdrehbaren Spannring (4, 4', 4'') und mit einem Dichtring (5, 5', 5''), der zwischen zwei sich am Futterrohr und am Spannring axial gegenüberstehenden ringförmigen Dichtflächen (6, 7, 7',7'') angeordnet ist, deren Abstand voneinander durch Verdrehen des Spannrings veränderlich ist, wobei der Spannring (4, 4', 4'') zu seiner Verdrehung mit einer Einrichtung zum Ansetzen eines Drehwerkzeugs (10) versehen ist, dadurch gekennzeichnet, daß der Spannring (4, 4',4'') als Einrichtung zum Ansetzen des Drehwerkzeugs (10) mit einer sich über den Ringumfang erstreckenden Querverzahnung (9) versehen ist, daß radial neben dem Spannring (4, 4',4'') am Futterrohr (2) eine Führungsaufnahme (11) vorgesehen ist und daß das Drehwerkzeug (10) ein Zahnrad (12) zum in Umfangsrichtung formschlüssigen Eingriff in die Querverzahnung (9) des Spannrings und einen mit dem Zahnrad (12) koaxialen Führungszapfen (13) zum drehbaren Eingriff in die Führungsaufnahme (11) am Futterrohr (2) sowie eine mit dem Führungszapfen (13) koaxiale Welle (14) für den Drehantrieb des Zahnrads (12) besitzt.

2. Vorrichtung nach Anspruch 1, dadurch gekennzeichnet, daß das Futterrohr (2) einen am Rohr drehfesten Außenflansch (15, 15', 15'') aufweist, in dem die Führungsaufnahme (11) als als ein mit seiner Achse zur Rohrachse (3) paralleles Sackloch ausgebildet ist.

3. Vorrichtung nach Anspruch 2, dadurch gekennzeichnet, daß das Sackloch durch den Außenrand (15''') des Außenflansches (15, 15', 15'') zur Hälfte seines Querschnitts angeschnitten ist.

4. Vorrichtung nach Anspruch 2 oder 3, dadurch gekennzeichnet, daß am Außenflansch (15'') die dem Dichtring (4'') zugeordnete Dichtfläche (7'') des Futterrohrs oder Spannrings ausgebildet ist.

5. Vorrichtung nach einem der Ansprüche 1 bis 4, dadurch gekennzeichnet, daß die Führungsaufnahme (11) am Futterrohr (2) zu mehreren in einer über den Rohrumfang verteilten Anordnung vorgesehen ist.

6. Vorrichtung nach einem der Ansprüche 1 bis 5, dadurch gekennzeichnet, daß zwischen dem Dichtring (5) und einer der ihm zugeordneten Dichtflächen (6, 7) des Futterrohres (2) bzw. Spannrings (4) ein Dichtflansch (18) eingefügt ist, der an einem Einsatzteil (19) ausgebildet ist, das sich im Inneren des Futterrohres (2) befindet.

7. Vorrichtung nach einem der Ansprüche 1 bis 6, dadurch gekennzeichnet, daß der Spannring (4, 4', 4'') in einem Gewinde (8) am Futterrohr (2) geführt und verdrehbar ist.

8. Vorrichtung nach Anspruch 7, dadurch gekennzeichnet, daß ein Schutzteil (51) vorgesehen ist, das mit einem Außengewinde koaxial in das am Futterrohr (2) an sich zur Aufnahme des Spannrings (4) vorhandene Innengewinde (8) einschraubbar ist und im eingeschraubten Zustand das Innengewinde (8) völlig abdeckt.

9. Vorrichtung nach Anspruch 8, dadurch gekennzeichnet, daß das Schutzteil (51) als Deckel ausgebildet ist, der im in das Futterrohr (2) eingeschraubten Zustand das Innere des Futterrohrs (2) verschließt.

10. Vorrichtung nach Anspruch 8 oder 9, dadurch gekennzeichnet, daß mit dem Ende des Futterrohres (2) sowohl der Außenflansch (15) als auch das im Futterrohr (2) eingeschraubte Schutzteil (51) bündig abschließen.

11. Vorrichtung nach einem der Ansprüche 8 bis 10, dadurch gekennzeichnet, daß das Schutzteil (51) mit einem Hilfsring (53) drehschlüssig koppelbar ist, und daß der Hilfsring (53) am Ringumfang die Querverzahnung (9) aufweist.

12. Vorrichtung nach Anspruch 11, dadurch gekennzeichnet, daß der Durchmesser des Hilfsrings (53) dem Durchmesser des Spannrings (4, 4', 4'') entspricht.

13. Vorrichtung nach Anspruch 11 oder 12, dadurch gekennzeichnet, daß im Schutzteil (51) Zapfenlöcher (55) angeordnet sind, in die an dem Hilfsring (53) ausgebildete Zapfen (54) einsteckbar sind.

14. Drehwerkzeug für den Spannring der Vorrichtung nach den Ansprüchen 1 bis 13, dadurch gekennzeichnet, daß die mit dem Zahnrad (12) drehfest verbundene Welle (14) an ihrem vom Zahnrad abgewandten Ende einen Mehrkant (28) zum Anschluß eines auf beide Drehrichtungen umstellbaren Ratschen- oder Knarrendrehers (29) aufweist.

15. Drehwerkzeug nach Anspruch 14, dadurch gekennzeichnet, daß die Welle (14) axial verlängerbar und/oder biegbar ausgebildet ist.
